# EUROPÄISCHE PATENTSCHRIFT

(11) **EP 3 024 635 B1**
(45) Veröffentlichungstag und Bekanntmachung des Hinweises auf die Patenterteilung: **28.06.2017**
(21) Anmeldenummer: 14742486.5
(22) Anmeldetag: 17.07.2014
(51) Int. Cl.: B29C 65/14, B29C 65/82, B29K 105/04

(54) **VERFAHREN ZUR HERSTELLUNG VON THERMOPLASTISCHEN SCHAUMSTOFFPLATTEN MITTELS MINDESTENS ZWEI PARALLEL ZUEINANDER VERSETZTER HEIZELEMENTE**
METHOD FOR THE MANUFACTURING OF THERMOPLASTIC FOAM PANELS BY MEANS OF AT LEAST TWO PARALLEL OFFSET HEATING ELEMENTS
PROCÉDÉ DE FABRICATION DE PLAQUES DE MOUSSE THERMOPLASTIQUES À L'AIDE D'AU MOINS DEUX ÉLÉMENTS DE CHAUFFAGE PARALLÈLES DÉCALÉS L'UN PAR RAPPORT À L'AUTRE

(30) Priorität: 24.07.2013 EP 13177902
(43) Veröffentlichungstag der Anmeldung: 01.06.2016
(73) Patentinhaber: BASF SE, 67056 Ludwigshafen am Rhein (DE)
(72) Erfinder: SCHERZER, Dietrich, 67433 Neustadt (DE); DIEHLMANN, Tim, 67283 Obrigheim-Colgenstein (DE); DIETZEN, Franz-Josef, 67454 Hassloch (DE); SANDNER, Carsten, 67098 Bad Dürkheim (DE); SCHALL, Herbert, 67354 Römerberg (DE)
(86) Internationale Anmeldenummer: PCT/EP2014/065400
(87) Internationale Veröffentlichungsnummer: WO 2015/011016

(56) Entgegenhaltungen:
- EP-A1- 2 578 381
- JP-A- 2012 232 564

## Beschreibung

Die vorliegende Erfindung betrifft ein Verfahren zur Herstellung von zumindest zweilagigen thermoplastischen Schaumstoffplatten durch thermisches Verschweißen von mindestens zwei dünneren thermoplastischen Schaumstoffplatten. Bei dem erfindungsgemäßen Verfahren werden mindestens zwei Heizelemente auf zueinander versetzten Ebenen zwischen die zu verschweißenden Oberflächen der dünneren thermoplastischen Schaumstoffplatten geführt, wobei sich die Schaumstoffplatten und die Heizelemente nicht gegenseitig berühren. Die Anzahl der Lagen der thermoplastischen Schaumstoffplatte als solche ergibt sich aus der Anzahl der dünneren thermoplastischen Schaumstoffplatten, die miteinander thermisch verschweißt werden. Wenn beispielsweise drei dünnere thermoplastische Schaumstoffplatten miteinander thermisch verschweißt werden, wird eine dreilagige thermoplastische Schaumstoffplatte als solche erhalten, im Fall von vier dünneren thermoplastische Schaumstoffplatten ergibt sich demzufolge eine vierlagige thermoplastische Schaumstoffplatte als solche.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1 318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

Extrudierte Kunststoffschaumplatten von großer Dicke werden in DE-A 101 063 41 offenbart. Mit dem darin beschriebenen Verfahren zur Verbindung von mindestens zwei Ausgangplatten aus Kunststoffschaum zu einer neuen Platte können Platten mit einer Mindestdicke von 70 mm hergestellt werden. Vorzugsweise handelt es sich dabei um fluorchlorkohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweiser Verschweißung oder stellenweiser Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 063 41 sind jedoch keine Angaben enthalten, wie anstelle einer Verklebung die Verschweißung der Ausgangsplatten konkret durchgeführt werden kann.

DE-A 44 21 016 offenbart ein Verfahren zur Herstellung von CO₂ -geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen wird mit Hilfe eines Heizschwertes durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwertes sowie mit direktem Kontakt vom Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist.

EP-A 2 578 381 betrifft ein Verfahren zur Herstellung von mehrschichtigen Plastikplatten, wie beispielsweise XPS, durch thermisches Verschweißen der entsprechenden dünneren Ausgangsplatten unter Verwendung eines zweigeteilten Heizelementes. Das zweiteilige Heizelement ist in Plattenform ausgeführt und die beiden Plattenteile werden von außen kommend auf einer Ebene zwischen die beiden zu verschweißenden Ausgangsplatten geführt, so dass sich die beiden Plattenteile berühren und sinngemäß eine einzige (auf das Doppelte gegenüber den jeweiligen Plattenteilen) verbreiterte Heizplatte darstellen. Das thermische Verschweißen wird vorzugsweise ohne direkten Kontakt zwischen den Heizelementen und den zu verschweißenden Plastikplatten durchgeführt. Das Heizelement wird für eine ausreichend lange Zeit zwischen den zu verschweißenden Ausgangsplatten gehalten. Eine konkrete Zeitangabe für den Begriff "ausreichend lange Zeit" ist in EP-A 2 578 381 jedoch nicht enthalten. Vielmehr ist die Zeit dann ausreichend, wenn die Ausgangsplatten an den jeweiligen Oberflächen im Wesentlichen in einem geschmolzenen Zustand vorliegen.

Ein weiteres Verfahren zur Herstellung von mehrschichtigen thermoplastischen Schaumstoffen durch thermisches Verschweißen von entsprechend dünneren Ausgangsplatten wird in US-A 4,764,328 offenbart. Bei diesem Verfahren findet unter Verwendung einer einzelnen Heizplatte, die gegebenenfalls auch in zwei Teilen vorliegen kann, ein direkter Kontakt zwischen Heizplatte und den zu verschweißenden Oberflächen der Ausgangsplatten beim Verschweißungsvorgang statt. Nachdem die zu verschweißenden Oberflächen unter Verwendung der Heizplatte so weit erhitzt worden sind, dass sie sich in einem flüssigen Zustand befinden, erfolgt in einer kurzen zeitlichen Abfolge das Verpressen der Ausgangsplatten. Die Ausgangsplatten können in weniger als einer Sekunde nach Entfernung der Heizplatten verpresst werden.

DE-A 10 2012 204 822 betrifft ein Verfahren zum dauerhaften flächigen Verbinden von zwei Werkstoffplatten von zwei aufgeschäumten Materialien. Eine erste und eine zweite Werkstoffplatte werden jeweils mit einer Fördereinrichtung in der gewünschten Orientierung und Deckung passgenau übereinander positioniert, einer Schweißstation zugeführt und dort entlang eines Trennschwertes bewegt. Durch die Positionierung des Trennschwertes zwischen den einander zugewandten Oberflächen der beiden Werkstoffplatten wird ein Spalt mit definierter Spaltbreite erzeugt. Durch ein sich im Spaltstrom abwärts zum Trennschwert befindendes fest installiertes Wärmeelement, vorzugsweise ein Heizschwert, werden durch berührungsfreie Wärmeübertragung die einander zugewandten Oberflächen der beiden Werkstoffplatten mit Wärme beaufschlagt, so dass mindestens eine dieser Oberflächen erweicht wird oder anschmilzt. Anschließend werden die beiden Werkstoffplatten durch Andrückelemente zusammengefügt, die die beiden Werkstoffplatten derart gegeneinander drücken, dass deren einander zugewandte Oberflächen aufgrund der vorangegangenen Wärmebeaufschlagung durch das Wärmeelement stoffschlüssig miteinander verbunden werden.

JP 2012 232564 offenbart ein Verfahren, um thermoplastische Materialien mit anderen thermoplastischen Materialien, Holz oder beispielsweise Papier zu verschweißen. Dabei werden zwei Heizelemente, die miteinander verbunden sind, auf zwei zueinander parallelen Ebenen zwischen die Platten eingeführt und die Platten so erhitzt. Nach dem Entfernen des Heizelements werden die Platten durch Vibrationsschweißen miteinander verbunden.

Ein grundlegendes Problem beim thermischen Verschweißen ist die Brennbarkeit und das Erfüllen von Brandtests. Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zwei- oder mehrlagigen Platten mit einer (gegenüber den eingesetzten dünneren Ausgangsplatten) größerer Dicke. Dieses unterschiedliche Brandverhalten ist in der Ausbildung der so genannten Schweißnaht während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht wird der Brandtest B2 (gemäß DIN 4102-1: 1998-05) bestanden oder nicht. Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als "Dochteffekt" bezeichnet. Ist hingegen keine Schweißnaht oder nur eine sehr dünne Schweißnaht vorhanden, sind die jeweiligen dünneren Platten nicht fest genug miteinander verbunden, so dass das entsprechende Produkt nicht stabil ist.

Die der vorliegenden Erfindung zugrunde liegende Aufgabe besteht in der Bereitstellung eines neuen Verfahrens zur Herstellung von zwei- oder mehrlagigen thermoplastischen Schaumstoffplatten durch thermisches Verschweißen.

Gelöst wird die Aufgabe durch ein Verfahren zur Herstellung einer zumindest zweilagigen thermoplastischen Schaumstoffplatte durch thermisches Verschweißen von mindestens zwei dünneren thermoplastischen Schaumstoffplatten, umfassend die folgenden Schritte a) bis e):
a) zwei dünnere thermoplastische Schaumstoffplatten werden in einem Abstand a parallel zueinander ausgerichtet, so dass sie einen Zwischenraum ausbilden,
b) in den Zwischenraum werden mindestens zwei Heizelemente auf parallel zueinander versetzten Ebenen und parallel zu den beiden dünneren thermoplastischen Schaumstoffplatten eingeführt, wobei sich die Oberflächen der beiden dünneren thermoplastischen Schaumstoffplatten und die Heizelemente nicht gegenseitig berühren,
c) die Heizelemente werden so weit zwischen die beiden dünneren thermoplastischen Schaumstoffplatten eingeführt, bis zwischen den beiden dünneren thermoplastischen Schaumstoffplatten bezogen auf jede Stelle der jeweiligen Oberfläche der beiden dünneren thermoplastischen Schaumstoffplatten zumindest zeitweise sich mindestens eines der Heizelemente befunden hat,
d) die Heizelemente werden vollständig aus dem Zwischenraum wieder entfernt,
e) mindestens eine der beiden dünneren thermoplastischen Schaumstoffplatten wird gegen die Oberfläche der jeweiligen anderen dünneren thermoplastischen Schaumstoffplatte gedrückt,
wobei in Schritt b) zwei Heizelemente aus jeweils zueinander entgegengesetzten Richtungen in den Zwischenraum eingeführt werden und/oder zwei Heizelemente in Schritt d) in jeweils zueinander entgegengesetzten Richtungen aus dem Zwischenraum wieder entfernt werden.

Die mit dem erfindungsgemäßen Verfahren hergestellten zumindest zweilagigen thermoplastischen Schaumstoffplatten zeichnen sich dadurch aus, dass die entsprechende Anzahl an dünneren thermoplastischen Schaumstoffplatten auf sehr stabile Weise zu den zumindest zweilagigen thermoplastischen Schaumstoffplatten (Produkt) zusammengefügt werden kann. Die im erfindungsgemäßen Verfahren gebildeten Schweißnähte, die aufgrund des thermischen Verschweißens die einzelnen dünneren thermoplastischen Schaumstoffplatten zu der zumindest zweilagigen thermoplastischen Schaumstoffplatte verbinden, zeichnen sich durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder in einem nur geringen Ausmaß ändert.

Das erfindungsgemäße Verfahren ist von seinem Prinzip her ein so genanntes "kontaktloses Verschweißen" (oder "berührungsloses Erhitzen"), da die Wärmeübertragung von den Heizelementen auf die zu verschweißenden Oberflächen der dünneren thermoplastischen Schaumstoffplatten (auch als "Ausgangsplatten" bezeichnet) ohne direkten Kontakt zwischen Heizelement und Ausgangsplatte stattfindet. Dies hat den Vorteil, dass im erfindungsgemäßen Verfahren keine (oder nur in sehr geringem Umfang) Dellen bzw. Einfallstellen auf den Oberflächen der zu verschweißenden Ausgangsplatten gebildet werden. Diese Einfallstellen sind jedoch insbesondere in den Randbereichen der Ausgangsplatten ein generelles Problem bei Verfahren, die auf einem direkten Kontakt zwischen Heizelement und zu verschweißender Oberfläche beruhen. Solche Dellen/Einfallstellen führen zu verstärkten Inhomogenitäten in der Schweißnaht, was sich wiederum (wie nachfolgend aufgeführt) negativ auf das Brandverhalten, aber auch die Stabilität der zumindest zweilagigen thermoplastischen Schaumstoffplatten auswirken kann.

Aufgrund der Verwendung von mindestens zwei Heizelementen, die auf parallel zueinander versetzten Ebenen und ohne direkten Kontakt mit den zu verschweißenden Ausgangsplatten im Rahmen des erfindungsgemäßen Verfahrens eingesetzt werden, ist als weiterer Vorteil festzuhalten, dass die zu verschweißenden Oberflächen der Ausgangsplatten in einem weit geringerem Maße einer unterschiedlichen Wärmebelastung ausgesetzt sind im Vergleich zu Verfahren gemäß dem Stand der Technik. Bei der Verwendung von nur einem Heizelement, das gegebenenfalls auch zweigeteilt sein kann, aber wo die einzelnen Teile auf einer Ebene geführt werden, sind im Gegensatz zum erfindungsgemäßen Verfahren die einzelnen Bereiche der jeweiligen Plattenoberfläche der zu verschweißenden Ausgangsplatten einer unterschiedlichen Wärmebelastung ausgesetzt, weil insbesondere die Randbereiche der Ausgangsplatten im Durchschnitt über eine deutlich längere Zeitspanne der entsprechenden Wärmequelle direkt oder indirekt ausgesetzt sind. Dies hat wiederum Auswirkungen auf die Homogenität der Schweißnaht.

In diesem Zusammenhang ist auch zu berücksichtigen, dass bei beweglichen Heizelementen durch die Dynamik des Ein- und Ausfahrens der Heizelemente zwischen die zu verschweißenden Ausgangsplatten kalte Luft hinter dem Heizelement hergezogen wird, während hingegen warme Luft vor dem Heizelement "aus dem Zwischenraum hinausgeschoben wird". Die auf diese Weise eintretende Pfropfenströmung oder turbulente Strömung zwischen den zu verschweißenden Platten hat wiederum negative Auswirkungen auf die Homogenität und somit Stabilität der zu bildenden Schweißnaht. Aufgrund der erfindungsgemäßen Verwendung von zwei beweglichen Heizelementen auf zueinander parallelen Ebenen wird hingegen Luft nur in einem deutlich geringerem Maße verdrängt und führt daher nicht zu einem unkontrollierten Ein- und Ausströmen von zu kalter oder heißer Luft. Insbesondere wenn im erfindungsgemäßen Verfahren zwei Heizelemente verwendet werden, die auf parallelen Ebenen aus zueinander entgegengesetzten Richtungen in den Zwischenraum zwischen den Ausgangplatten eingeführt werden, kann das Problem der Pfropfenströmung bzw. turbulenten Strömung deutlich minimiert werden und eine noch homogenere Schweißnaht zwischen den zu verschweißenden Ausgangsplatten erzielt werden. Dieser Effekt kann weiterhin verstärkt werden, wenn auch das Ausfahren der beiden Heizelemente in jeweils entgegengesetzte Richtungen erfolgt. Besonders vorteilhaft ist dabei das Einfahren und Ausfahren der einzelnen Platten ohne Richtungsänderung, weil dadurch das erfindungsgemäße Verfahren schneller durchgeführt werden kann im Vergleich zu einer Variante mit Richtungsumkehr der beiden Heizelemente beim Ausfahrschritt im Vergleich zum Einfahrschritt.

Ein weiterer Vorteil ist im erfindungsgemäßen Verfahren darin zu sehen, dass hinsichtlich der Plattendicke der Ausgangsplatten keine Begrenzungen erforderlich sind. Im Gegensatz dazu können in Verfahren gemäß dem Stand der Technik, beispielsweise wie sie in DE-A 10 2012 204 822 offenbart sind, nur Ausgangsplatten mit einer maximalen Dicke von 80 bis 100 mm verarbeitet werden, weil aufgrund des prinzipiell V-förmigen Zuführens (und Bewegens) der Ausgangsplatten mindestens eine der Ausgangsplatten während des thermischen Verschweißens geknickt wird. Da bei diesem Verfahren ein prinzipiell starres Heizelement, insbesondere ein Heizschwert, verwendet wird, müssen die Ausgangsplatten über das Heizelement bewegt werden. Im Gegensatz dazu wird im erfindungsgemäßen Verfahren das Heizelement zwischen den - in diesem Verfahrensstadium - prinzipiell starren Ausgangsplatten bewegt. Ein Bewegen der Ausgangsplatten findet im erfindungsgemäßen Verfahren prinzipiell erst nach Entfernung der Heizelemente aus dem Plattenzwischenraum statt, wobei die zu verschweißenden Ausgangsplatten durch Bewegung von mindestens einer der Ausgangsplatten miteinander verbunden werden. Mit dem erfindungsgemäßen Verfahren lassen sich so problemlos drei- oder höherlagige thermoplastische Schaumstoffplatten von beliebiger Dicke herstellen.

Ein weiterer Vorteil des erfindungsgemäßen Verfahrens ist darin zu sehen, dass prinzipiell sehr kurze Umstellzeiten durchgeführt werden können. Unter "Umstellzeiten" wird erfindungsgemäß die Zeit verstanden, die zwischen Erhitzen bzw. Aufschmelzen der Schaumstoffoberfläche und dem Zusammenfügen der erhitzten bzw. aufgeschmolzenen Schaumstoffoberfläche verstreicht. Im erfindungsgemäßen Verfahren ist dies somit die Zeitspanne, die mit dem Einführen von wenigstens zwei Heizelemente gemäß Schritt b) beginnt und mit dem Zusammenführen der entsprechenden Ausgangsplatten gemäß Schritt e) endet. Eine kurze Umstellzeit kann insbesondere aufgrund der Beweglichkeit der Heizelemente im Rahmen eines kontaktlosen Verschweißens erzielt werden.

Wie vorstehend bereits erwähnt, wirkt sich die Homogenität bzw. die Dicke der Schweißnähte zwischen den Ausgangsplatten positiv auf das Flammverhalten (verbesserter Flammschutz) des mit dem erfindungsgemäßen Verfahren erhaltenen Produktes aus. Vorzugsweise bestehen die mit dem erfindungsgemäßen Verfahren hergestellten zumindest zweilagigen thermoplastischen Schaumstoffplatten den Brandtest B2 (gemäß DIN 4102-1: 1998-05). Dies bedeutet, dass im Rahmen der vorliegenden Erfindung der Dochteffekt, insbesondere beim Brandtest B2, vermieden werden kann, so dass in den erfindungsgemäßen zumindest zweilagigen thermoplastischen Schaumstoffplatten die Schweißnaht der Brandprüfung gemäß Brandtest B2 standhält.

Dies wird im Rahmen der vorliegenden Erfindung vorzugsweise erzielt, indem die beim thermischen Verschweißen von zwei Ausgangsplatten zwischen diesen Ausgangsplatten gebildete Schweißnaht eine Dicke von (durchschnittlich) 30 bis 200 µm aufweist. Die Dicke der Schweißnaht kann erfindungsgemäß insbesondere durch den Abstand der Heizelemente zu den zu verschweißenden Ausgangsplatten, die Temperatur der Heizelemente sowie die Geschwindigkeit der Heizelemente, mit der sie in den Zwischenraum zwischen die Ausgangsplatten ein- sowie aus diesem ausgeführt werden, gesteuert werden. Wird beispielsweise eine drei- oder mehrlagige thermoplastische Schaumstoffplatte hergestellt, weisen vorzugsweise alle zwischen den einzelnen Plattenpaaren gebildeten Schweißnähte eine Dicke von (durchschnittlich) 30 bis 200 µm auf, wobei die entsprechenden Dicken zwischen den einzelnen Plattenpaaren auch variieren können. Die zumindest zweilagigen thermoplastischen Schaumstoffplatten als solche weisen weiterhin eine hohe Zugfestigkeit auf, vorzugsweise eine Zugfestigkeit von > 0,15 N/mm².

Ein besonders stabiler Zusammenhalt der einzelnen dünneren thermoplastischen Schaumstoffplatten wird dann erzielt, wenn diese auf Temperaturen oberhalb der Glasübergangs- oder Schmelztemperatur des verwendeten Thermoplasten erhitzt werden. Vorzugsweise werden die einzelnen dünneren thermoplastischen Schaumstoffplatten anschließend zusätzlich miteinander verpresst. Die mit dem erfindungsgemäßen Verfahren hergestellten zumindest zweilagigen thermoplastischen Schaumstoffplatten, insbesondere diejenigen, bei denen die Oberflächen der Schaumstoffplatten auf Temperaturen oberhalb der Glasübergangstemperatur erhitzt werden, haben als weiteren vorteilhafte Eigenschaft eine hohe Wasserdampfdurchlässigkeit und/oder Festigkeit der miteinander thermisch verschweißten Schaumstoffplatten.

Sofern das erfindungsgemäße Verfahren unter Verwendung eines Absorbers von elektromagnetischer Strahlung durchgeführt wird, wobei der Absorber auf die entsprechenden Oberflächen der dünneren thermoplastischen Schaumstoffplatten, die miteinander thermisch verschweißt werden, aufgetragen wird, ist ein weiterer Vorteil darin zu sehen, dass die Strahlungsdurchlässigkeit der zumindest zweilagigen thermoplastischen Schaumstoffplatten als solche reduziert wird und/oder das Wärmeleitfähigkeitsverhalten verbessert werden kann. Die Wärmeleitfähigkeit kann um bis zu 10 % vermindert werden im Vergleich zu herkömmlichen Platten, bei denen kein Absorber von elektromagnetischer Strahlung verwendet wird. Eine Verminderung der Wärmeleitfähigkeit bedeutet ein (Wärme-) Dämmungseffekt.

Nachfolgend wird das erfindungsgemäße Verfahren zur Herstellung einer zumindest zweilagigen thermoplastischen Schaumstoffplatte näher definiert.

Die mit dem erfindungsgemäßen Verfahren hergestellte thermoplastische Schaumstoffplatte ist zumindest zweilagig, sie kann also genau zwei Lagen aufweisen oder dreilagig, vierlagig, fünflagig oder noch höherlagig sein. Wie vorstehend bereits ausgeführt, ergibt sich die Anzahl der Lagen der thermoplastischen Schaumstoffplatte als solche aus der Anzahl der dünneren thermoplastischen Schaumstoffplatten, die miteinander thermisch verschweißt werden. Die dünneren thermoplastischen Schaumstoffplatten werden auch als Ausgangsplatten bezeichnet. Im Falle einer zweilagigen thermoplastischen Schaumstoffplatte als solche werden also zwei dünnere thermoplastische Schaumstoffplatten miteinander thermisch verschweißt. Bei einer drei- oder vierlagigen thermoplastischen Schaumstoffplatte als solcher werden somit drei bzw. vier dünnere thermoplastische Schaumstoffplatten miteinander thermisch verschweißt. Sofern noch höherlagige thermoplastische Schaumstoffplatten als solche hergestellt werden sollen, beispielsweise eine zehnlagige thermoplastische Schaumstoffplatte, müssen demzufolge die der Anzahl der Lagen entsprechende Anzahl an dünneren thermoplastischen Schaumstoffplatten, beispielsweise zehn dünnere thermoplastische Schaumstoffplatten, miteinander thermisch verschweißt werden. Vorzugsweise ist die erfindungsgemäße thermoplastische Schaumstoffplatte zweilagig, dreilagig oder vierlagig, insbesondere ist die erfindungsgemäße thermoplastische Schaumstoffplatte zweilagig. Das thermische Verschweißen als solches (Durchführung) wird weiter unten im Text im Zusammenhang mit dem erfindungsgemäßen Herstellungsverfahren näher definiert.

Die zum thermischen Verschweißen verwendeten dünneren thermoplastischen Schaumstoffplatten entsprechen hinsichtlich ihrer chemischer Zusammensetzung den im Rahmen der vorliegenden Erfindung hergestellten zumindest zweilagigen thermoplastischen Schaumstoffplatten als solchen (ohne Berücksichtigung der im Rahmen des Verschweißungsvorganges optional auf die Oberflächen aufgebrachten Komponenten wie Absorber von elektromagnetischer Strahlung oder Flammschutzmittel bzw. ohne Berücksichtigung der infolge der Ausbildung der Schweißnaht an den entsprechenden Oberflächen auftretenden chemischen Veränderungen/Reaktionen). Die jeweils thermisch miteinander zu verschweißenden dünneren thermoplastischen Schaumstoffplatten weisen vorzugsweise dieselbe Dimensionen und/oder dieselbe chemische Zusammensetzung auf. Gegebenenfalls können aber auch dünnere thermoplastische Schaumstoffplatten mit unterschiedlichen Dimensionen und/oder unterschiedlicher chemischer Zusammensetzung miteinander thermisch verschweißt werden. Werden beispielsweise drei dünnere thermoplastische Schaumstoffplatten miteinander thermisch verschweißt, die allesamt die gleiche Dimensionierung aufweisen und (beispielsweise) ein extrudierter Polystyrol-Schaumstoff (XPS-Schaumstoff) sind, wird dadurch ein dreilagiger thermoplastischer extrudierter Polystyrol-Schaumstoff (XPS) erhalten.

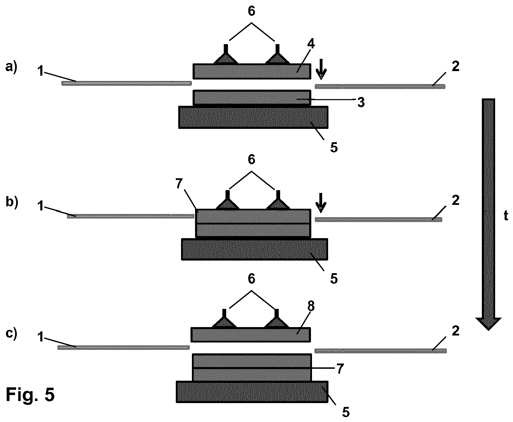

Die Dimensionierung der thermisch miteinander zu verschweißenden dünneren thermoplastischen Schaumstoffplatten ist beliebig. Hinsichtlich ihrer Länge und Breite können sie Maße im Zentimeterbereich bis hin zu mehreren Metern aufweisen. Hinsichtlich der dritten Dimension (Dicke) sind theoretisch ebenfalls beliebige Maße denkbar, in der Praxis weisen die dünneren thermoplastischen Schaumstoffplatten eine Dicke von 10 bis 300 mm auf. Bezogen auf ein rechtwinkliges Koordinatensystem wird erfindungsgemäß die Länge einer Ausgangsplatte bzw. einer zumindest zweilagigen thermoplastischen Schaumstoffplatte als solche auch als "x-Richtung" bezeichnet, die entsprechende Breite als "y-Richtung" und die Dicke als "z-Richtung". Die Dicke von mindestens einer der so verschweißten Ausgangsplatten mit einer zunehmenden Anzahl von Verschweißungsschritten steigt kontinuierlich an. In Figur 5 c) ist der Fall dargestellt, dass eine dreilagige thermoplastische Schaumstoffplatte durch Verschweißen einer einzelnen dünneren thermoplastischen Schaumstoffplatte 8 mit einer bereits zweilagigen thermoplastischen Schaumstoffplatte 7, die für sich wiederum eine Ausgangsplatte bezüglich der zu erzielenden dreilagigen thermoplastischen Schaumstoffplatte darstellt, hergestellt wird. Die vorstehend bzw. nachfolgend angegebenen Werte hinsichtlich der Dicke einer dünneren thermoplastischen Schaumstoffplatte beziehen sich auf die entsprechenden Werte einer Ausgangsplatte, die für sich genommen noch keinen thermischen Verschweißungsschritt erfahren hat. Sofern eine zwei- oder höherlagige thermoplastische Schaumstoffplatte als Ausgangsplatte für einen weiteren Verschweißungsschritt im Sinne von Figur 5 c) eingesetzt werden soll, sind die Dicken der entsprechenden zwei- oder höherlagigen Ausgangsplatten entsprechend höher.

Die Dicke der im erfindungsgemäßen Verfahren hergestellten zumindest zweilagigen thermoplastischen Schaumstoffplatten ergibt sich somit aus der Gesamt-Dicke der insgesamt eingesetzten dünneren thermoplastischen Schaumstoffplatten (Ausgangsplatten). Aufgrund des thermischen Verschweißens werden die jeweils miteinander zu verschweißenden Oberflächen der Ausgangsplatten zumindest etwas auf- oder angeschmolzen (Aufschmelzschritt), was in Abhängigkeit der zugeführten Wärmemenge zu einer gewissen Reduzierung der Dicke der jeweiligen Ausgangsplatte führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit großer Wärmezufuhr durchgeführt wird, ist die Dicke der zumindest zweilagigen thermoplastischen Schaumstoffplatten als solche geringer als die Summe der jeweiligen Dicken der eingesetzten dünneren thermoplastischen Schaumstoffplatten.

Vorzugsweise weisen die zwei dünneren thermoplastischen Schaumstoffplatten in Schritt a) jeweils eine Länge (x-Richtung) von 500 bis 2800 mm, vorzugsweise von 1000 bis 1500 mm, eine Breite (y-Richtung) von 500 bis 1250 mm, vorzugsweise von 500 bis 900 mm, und eine Dicke (z-Richtung) von 20 bis 200 mm, vorzugsweise von 50 bis 100 mm, auf.

Die zum thermischen Verschweißen eingesetzten dünneren thermoplastischen Schaumstoffplatten als solche sind dem Fachmann prinzipiell bekannt. Geeignete thermoplastische Schaumstoffplatten sind beispielsweise in EP-A 1 566 490 oder in Form von Blends in WO 2009/047487 offenbart. Beispielsweise können Platten aus amorphen, kristallinen oder teilkristallinen thermoplastischen Schaumstoffen eingesetzt werden.

Vorzugsweise sind die dünneren thermoplastischen Schaumstoffplatten ein Partikelschaumstoff oder ein Extrusionsschaumstoff. Weiterhin ist es bevorzugt, dass die dünneren thermoplastischen Schaumstoffplatten eine Dichte von 10 bis 500 g/l, vorzugweise von 15 bis 200 g/l, insbesondere von 20 bis 150 g/l, aufweisen. Ein bevorzugter Partikelschaumstoff ist Styropor^{®}, das kommerziell von der BASF SE erhältlich ist. Mehr bevorzugt sind die dünneren thermoplastischen Schaumstoffplatten ein Extrusionsschaumstoff. Der Extrusionsschaumstoff ist vorzugsweise ein Polystyrol oder ein aus Styrol hergestelltes Copolymer. Gegebenenfalls können auch Gemische aus solchen Polymeren eingesetzt werden. Besonders bevorzugt ist der Extrusionsschaumstoff extrudiertes Polystyrol (XPS), der beispielsweise unter der Bezeichnung Styrodur® von der BASF SE kommerziell erhältlich ist.

Sofern der Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Die Durchführung des thermischen Verschweißens als solches ist dem Fachmann bekannt. Der Effekt des thermischen Verschweißens wird bei den zu verschweißenden Oberflächen erfindungsgemäß dadurch erzielt, indem die jeweiligen Oberflächen der Ausgangsplatten einer Wärmequelle ausgesetzt werden. Im erfindungsgemäßen Verfahren stellen die mindestens zwei Heizelemente, die auf parallel zueinander versetzten Ebenen und parallel zu den beiden dünneren thermoplastischen Schaumstoffplatten in den entsprechenden Zwischenraum eingeführt werden, die Wärmequelle dar.

Durch das thermische Verschweißen bildet sich zwischen den zu verschweißenden Oberflächen (der Ausgangsplatten) eine Schweißnaht aus. Anstelle des Begriffs "Schweißnaht" können auch die Begriffe "Schweißhaut" oder "Schweißzone" verwendet werden. Pro zu verschweißendem Ausgangsplattenpaar wird beim thermischen Verschweißen zwischen den miteinander in Kontakt gebrachten Oberflächen der beiden Ausgangsplatten eine Schweißnaht ausgebildet. Wird beispielsweise eine dreilagige thermoplastische Schaumstoffplatte hergestellt, werden drei dünnere thermoplastische Schaumstoffplatten (Ausgangsplatten) eingesetzt und somit zwei Schweißnähte ausgebildet. Vorzugsweise weist mindestens eine Schweißnaht eine Dicke von 30 bis 200 µm auf. Vorzugsweise weist jede Schweißnaht eine Dicke von 30 bis 200 µm auf, insbesondere hat jede Schweißnaht die gleiche Dicke (beispielsweise 100 µm), Im vorstehenden Beispiel weisen bei dieser bevorzugten Ausgestaltung also beide Schweißnähte eine Dicke im Bereich von 30 bis 200 µm auf, wobei die Dicke (Stärke) der ersten Schweißnaht im Vergleich zur zweiten Schweißnaht gleich oder verschieden sein kann, vorzugsweise sind beide Werte gleich.

Vorzugsweise weist die Schweißnaht eine Dicke von 50 bis 150 µm, mehr bevorzugt von 70 bis 130 µm, insbesondere von 80 bis 100 µm, auf. Die im Rahmen der vorliegenden Erfindung für die Dicke einer Schweißnaht aufgeführten Zahlenwerte sind als Durchschnittswert zu verstehen, wobei vorzugsweise zur Ermittlung eines solchen Durchschnittswerts fünf Messpunkte, die über die gesamte Länge der Schweißnaht verteilt sind und die durch Lichtmikroskopie bestimmt werden, herangezogen werden. Erfindungsgemäß erstrecken sich die vorgenannten Werte hinsichtlich der Schweißnahtdicke über den kompletten Umfang der Schweißnaht.

Die erfindungsgemäßen thermoplastischen Schaumstoffplatten beziehungsweise die entsprechenden Ausgangsplatten können beliebige Werte hinsichtlich ihrer Zellgröße und/oder mittleren Zellenzahl aufweisen. Die jeweiligen Werte der Ausgangsplatten finden sich auch in den erfindungsgemäßen thermoplastischen Schaumstoffplatten wieder, das heißt sie werden durch das thermische Verschweißen nicht verändert. Allerdings ist es bevorzugt, dass die Zellgröße der thermoplastischen Schaumstoffplatte < 150 µm, vorzugsweise < 80 µm ist und/oder die mittlere Zellenzahl > 6 Zellen/mm beträgt. Während Ausgangsplatten mit einer mittleren Zellgröße 200 µm und größer eine erhöhte Oberflächenrauigkeit und grobe Zellstruktur aufweisen, haben insbesondere Ausgangsplatten mit einer mittleren Zellgröße < 150 µm, vorzugsweise < 80 µm, eine sehr feine Struktur und eine glatte Oberfläche, was sich positiv auf das Bestehen der Brandtests und auf das Wärmeisolationsvermögen auswirkt.

In Schritt a) des erfindungsgemäßen Verfahrens werden zwei dünnere thermoplastische Schaumstoffplatten in einem Abstand a parallel zueinander ausgerichtet, so dass sie einen Zwischenraum ausbilden.

Der Abstand a ist dabei so gewählt, dass mindestens zwei Heizelemente zwischen den entsprechenden Ausgangsplatten in parallel zueinander versetzten Ebenen so bewegt werden können, dass sie die Oberflächen der entsprechenden Ausgangsplatten nicht berühren (siehe auch Ausführungen zum nachfolgenden Schritt b)). Dabei weisen die Heizelemente auch einen gewissen Abstand zueinander auf, um ein reibungsloses Ein- und Ausführen der Heizelemente zu gewährleisten. Der Abstand a ist umso größer, je höher die Anzahl an Heizelementen im erfindungsgemäßen Verfahren ist, die auf parallel zueinander versetzten Ebenen in den Zwischenraum ein- und aus diesem ausgeführt werden.

Vorzugsweise beträgt in Schritt a) der Abstand a 10 bis 150 mm, insbesondere 15 bis 80 mm.

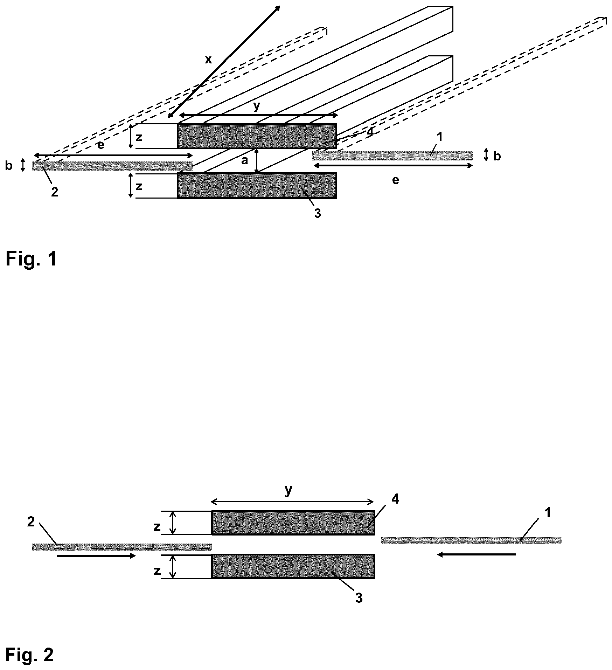

In Figur 1 ist die parallele Ausrichtung der Ausgangsplatten gemäß Schritt a) anschaulich dargestellt. Die beiden dünneren thermoplastischen Schaumstoffplatten (Ausgangsplatten) sind dort durch Bezugszeichen "3" und "4" gekennzeichnet. "x" stellt die jeweilige Länge der Ausgangsplatte (vorzugsweise 500 bis 2800 mm) dar, "y" steht für die Breite der Ausgangsplatten, vorzugsweise 500 bis 1250 mm, und "z" steht für die Dicke der Ausgangsplatten, vorzugsweise 50 bis 100 mm. Die beiden Ausgangsplatten 3 und 4 sind parallel im Abstand a zueinander ausgerichtet, der vorzugsweise 10 bis 150 mm beträgt.

In Schritt b) des erfindungsgemäßen Verfahrens werden in den Zwischenraum mindestens zwei Heizelemente auf parallel zueinander versetzten Ebenen und parallel zu den beiden dünneren thermoplastischen Schaumstoffplatten eingeführt, wobei sich die Oberflächen der beiden dünneren thermoplastischen Schaumstoffplatten und die Heizelemente nicht gegenseitig berühren.

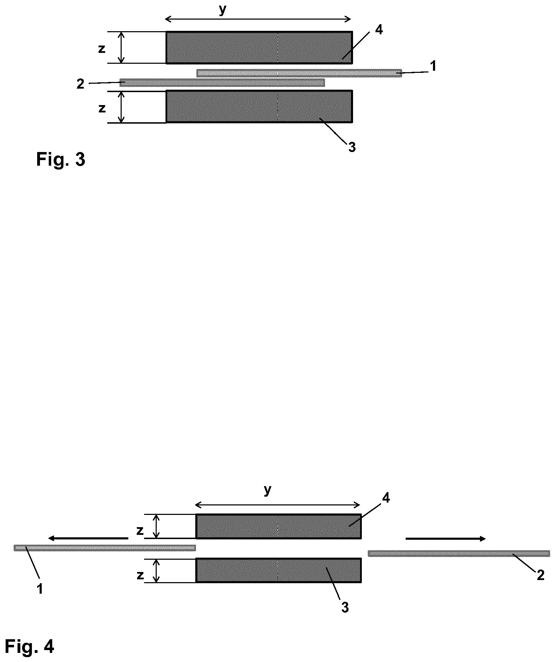

Als Heizelemente können erfindungsgemäß alle dem Fachmann bekannten Heizelemente eingesetzt werden, die beweglich sind und ein kontaktloses Verschweißen im Sinne der vorliegenden Erfindung ermöglichen. Vorzugsweise werden erfindungsgemäß zwei Heizelemente verwendet, weiterhin ist es bevorzugt, dass die Heizelemente Heizplatten sind. Sofern mehr als zwei Heizelemente verwendet werden, ist es bevorzugt, eine gerade Anzahl von Heizelementen auf parallel zueinander versetzten Ebenen einzusetzen. Bevorzugte Heizplatten sind IR-Strahler mit einer Oberflächentemperatur von 200 bis 1000 °C, insbesondere von 300 bis 700 °C. Sie können beispielsweise in der Außenposition (Ruheposition) vorgeheizt werden oder elektrisch über Widerstandsheizungen oder mittels Wärmeträgerölen erhitzt werden. In Figur 2 ist eine solche Außenposition (Ruheposition oder Parkposition) für die beiden Heizplatten 1 und 2 bildhaft dargestellt. Als Außenposition werden also die Positionierungen der Heizelemente aufgefasst, die sich außerhalb des im vorstehenden Schritt definierten Zwischenraum zwischen den beiden Ausgangsplatten befinden. Wie aus Figur 2 ersichtlich, werden die beiden Heizelemente 1 und 2, vorzugsweise Heizplatten, in Pfeilrichtung in besagten Zwischenraum zwischen den Ausgangsplatten eingeführt (siehe auch Figur 3 bzw. Figur 1).

Vorzugsweise werden erfindungsgemäß zwei identische Heizelemente, insbesondere Heizplatten, verwendet, gegebenenfalls können die Heizelemente auch hinsichtlich ihrer Beschaffenheit, insbesondere Dicke, unterschiedlich geartet sein. Die Dimensionen der Heizelemente werden in Abstimmung mit den entsprechenden Dimensionen der zu verschweißenden Ausgangsplatten gewählt. Prinzipiell können die Heizelemente sowohl hinsichtlich ihrer Länge (x-Richtung), ihrer Breite (y-Richtung) als auch ihrer Dicke (z-Richtung) jeweils größer und/oder kleiner als die entsprechenden Dimensionierungen der zu verschweißenden Ausgangsplatten sein. Bevorzugt ist, dass die Heizelemente, insbesondere Heizplatten, in ihrer Länge (x-Richtung) jeweils gleich groß oder maximal 10 % größer sind als die entsprechenden Längen (x-Richtung) der zwei dünneren thermoplastischen Schaumstoffplatten und die Heizelemente in ihrer Breite (y-Richtung) 30 bis 100 %, vorzugsweise 60 bis 80 %, der entsprechenden Breite (y-Richtung) der zwei dünneren thermoplastischen Schaumstoffplatten betragen. In Figur 1 ist die Breite einer Heizplatte mit "e" dargestellt, die beispielsweise 250 bis 1400 mm betragen kann. Die Dicke der Heizplatten ist in Figur 1 mit "b" dargestellt, vorzugsweise beträgt die Dicke der beiden Heizplatten 1 und 2 5 bis 50 mm.

In Schritt c) des erfindungsgemäßen Verfahrens werden die Heizelemente so weit zwischen die beiden dünneren thermoplastischen Schaumstoffplatten eingeführt, bis zwischen den beiden dünneren thermoplastischen Schaumstoffplatten bezogen auf jede Stelle der jeweiligen Oberfläche der beiden dünneren thermoplastischen Schaumstoffplatten zumindest zeitweise sich mindestens eines der Heizelemente befunden hat.

Schritt c) ist bildlich in Figur 3 dargestellt. Wie aus Figur 3 ersichtlich, ist jede Stelle (Punkt oder Bereich) der jeweiligen Oberfläche der jeweiligen Ausgangplatten 3 und 4 benachbart zu mindestens einem der beiden Heizelemente 1 und 2. Mit anderen Worten ausgedrückt, befindet sich an jeder Stelle zwischen den beiden Ausgangsplatten mindestens eines der beiden Heizelemente.

In Schritt d) werden die Heizelemente vollständig aus dem Zwischenraum wieder entfernt. Dies ist bildlich in Figur 4 dargestellt. Erfindungsgemäß erfolgt das Entfernen der Heizelemente vorzugsweise in der gleichen Richtung wie das Einführen der Heizelemente in Schritt b). Wie aus der zweidimensionalen Darstellung gemäß den Figuren 2 bis 4 ersichtlich, wird das Heizelement 1 von rechts nach links durch den Zwischenraum zwischen den beiden Ausgangsplatten geführt, während das Heizelement 2 in genau entgegengesetzte Richtung von links nach rechts durchgeführt wird.

In Schritt e) wird mindestens eine der beiden dünneren thermoplastischen Schaumstoffplatten gegen die Oberfläche der jeweiligen anderen dünneren thermoplastischen Schaumstoffplatte gedrückt.

Dieser Schritt wird nachfolgend für die horizontale Anordnung der beiden dünneren thermoplastischen Schaumstoffplatten erläutert. Die Ausführungen gelten sinngemäß auch für die vertikale Ausrichtung der beiden dünneren thermoplastischen Schaumstoffplatten.

Prinzipiell ist es denkbar, dass beide Ausgangsplatten in Schritt e) gegeneinander gedrückt werden, also so lange aufeinander zu bewegt werden, bis der Abstand a gleich null ist. Vorzugsweise wird erfindungsgemäß aber nur eine der beiden Ausgangsplatten gegen die jeweils andere Ausgangsplatte gedrückt. Dies ist bildhaft in Figur 5a) und 5b) dargestellt. Bei einer bezogen auf die Räumlichkeit horizontalen Anordnung der Ausgangsplatten (wie sie in den Figuren 2 bis 5 dargestellt ist), ist es bevorzugt, dass die räumlich gesehen obere Ausgangsplatte 4 gegen die untere Ausgangsplatte 3 gedrückt wird. Dies erfolgt vorzugsweise unter Verwendung einer entsprechenden Greifvorrichtung 6, mit der die Ausgangsplatten sowohl angehoben als auch unter Anwendung von Druck gegen die unteren Platten verschoben werden können. Wie in Figur 5 bildlich dargestellt, können die unteren Ausgangsplatten 3 auf einer Senkvorrichtung 5 aufliegen, die, wie in Figur 5c) dargestellt, bei der Herstellung von höherlagigen thermoplastischen Schaumstoffplatten entsprechend nach unten bewegt werden kann. Die Vorrichtung 5 kann gegebenenfalls jedoch auch so ausgestattet sein, dass sie auch zum Andrücken der Ausgangsplatte 3 in Richtung der Ausgangsplatte 4 eingesetzt werden kann. Vorzugsweise wird die Vorrichtung 5 aber während der Durchführung der erfindungsgemäßen Schritte a) bis e) nicht bewegt. Ein Absenken der Vorrichtung 5 erfolgt, wie in Figur 5c) dargestellt, erst vor der Wiederholung der Schritte a) bis e), um eine drei- oder höherlagige thermoplastische Schaumstoffplatte herzustellen. Die mittlerweile zweilagige Ausgangsplatte ist in Figur 5c) mit "7" gekennzeichnet, die neue dünnere Ausgangsplatte mit "8". Die Ausgangsplatten 4 und 8 sind in der Regel identisch.

Weiterhin ist es bevorzugt, dass im erfindungsgemäßen Verfahren im Rahmen von Schritt e) ein Verpressen der thermisch zu verschweißenden zusammengefügten dünnen thermoplastischen Schaumstoffplatten durchgeführt wird. Das Verpressen erfolgt im Allgemeinen im Sekunden- bis Minutenbereich und/oder bei einem Pressdruck von 0,01 bis 0,5 bar, vorzugsweise von 0,1 bis 0,5 bar.

Es ist außerdem bevorzugt, dass im erfindungsgemäßen Verfahren in Schritt e) mindestens eine der beiden dünneren thermoplastischen Schaumstoffplatten gegen die Oberfläche der jeweiligen anderen dünneren thermoplastischen Schaumstoffplatte gedrückt wird und mindestens eine der beiden dünneren thermoplastischen Schaumstoffplatten in Vibration oder Rotation versetzt wird. Dies wird auch als "Vibrationsschweißen" bezeichnet.

Erfindungsgemäß werden in Schritt b) zwei Heizelemente aus jeweils zueinander entgegengesetzten Richtungen in den Zwischenraum eingeführt und/oder zwei Heizelemente in Schritt d) in jeweils zueinander entgegengesetzten Richtungen aus dem Zwischenraum wieder entfernt. In den Figuren 2 bis 5 ist dies bildlich dargestellt, wonach die beiden Heizelemente 1 und 2, vorzugsweise Heizplatten, jeweils in entgegengesetzte Richtung zueinander in den Zwischenraum eingeführt werden und diese Bewegungsrichtung wird auch beim Ausführen beibehalten, was im Rahmen des erfindungsgemäßen Verfahrens besonders bevorzugt ist.

Erfindungsgemäß bevorzugt werden in Schritt b) zwei Heizelement aus jeweils zueinander entgegengesetzten Richtungen in den Zwischenraum eingeführt und zwei Heizelemente in Schritt d) in jeweils zueinander entgegengesetzten Richtungen aus dem Zwischenraum wieder entfernt.

Das erfindungsgemäße Verfahren kann sowohl in horizontaler als auch in vertikaler Ausrichtung der Heizelemente durchgeführt werden. Bevorzugt ist jedoch die vertikale Ausführungsform (jeweils bezogen auf die Räumlichkeit).

Erfindungsgemäß ist es bevorzugt, dass die Heizelemente in den Schritten b) und d) mit einer Geschwindigkeit von 0,1 bis 5 m/s, vorzugsweise von 0,3 bis 3 m/s, bewegt werden.

In einer weiteren bevorzugten Ausführungsform der vorliegenden Erfindung werden die Heizelemente parallel zur xy-Ebene und entlang der γ-Richtung (Breite) der zwei dünneren thermoplastischen Schaumstoffplatten bewegt.

Weiterhin ist es erfindungsgemäß bevorzugt, dass in den Schritten b) bis d) der Abstand zwischen der Oberfläche jeweils einer der beiden dünneren thermoplastischen Schaumstoffplatten und der Oberfläche des ihr jeweils räumlich am nächsten kommenden Heizelementes 0,5 bis 25 mm, bevorzugt 1 bis 10 mm, beträgt.

Weiterhin ist es bevorzugt, dass im erfindungsgemäßen Verfahren die Umstellzeit kurzgehalten wird. Dies bedeutet, dass die Gesamtdauer der Schritte b) bis e) maximal 20 Sekunden, vorzugsweise maximal 10 Sekunden, insbesondere maximal 5 Sekunden beträgt.

Weiterhin ist es bevorzugt, dass das erfindungemäße Verfahren in einer thermisch isolierten Einhausung durchgeführt wird und eine um +/- 10 °C konstante Temperatur im Bereich von 40 bis 200 °C, bevorzugt von 50 bis 100 °C, in der thermischen Einhausung aufrechterhalten wird.

Vorzugsweise werden die erfindungsgemäßen thermoplastischen Schaumstoffplatten aus zumindest teilweise schäumhautfreien Ausgangsplatten hergestellt, das heißt beim thermischen Verschweißen sind pro zu verschweißendem Plattenpaar mindestens eine, vorzugsweise beide, thermisch zu verschweißenden Oberflächen der dünneren thermoplastischen Schaumstoffplatten (Ausgangsplatten) schäumhautfrei. Unter dem Begriff "schäumhautfrei" wird im Rahmen der vorliegenden Erfindung verstanden, dass die beim Herstellungsprozess der jeweiligen thermoplastischen Schaumstoffplatte entstandene Schäumhaut beispielsweise durch Hobeln oder Fräsen wieder entfernt wird. Der Vollständigkeit halber wird darauf hingewiesen, dass bei Verwendung eines Extrusionsschaumstoffes die entsprechende Oberfläche auch als extrusionshautfrei anstelle von schäumhautfrei bezeichnet wird.

Weiterhin ist es im Rahmen der vorliegenden Erfindung bevorzugt, dass auf Temperaturen oberhalb der Glasübergangstemperatur und/oder Schmelztemperatur der thermoplastischen Schaumstoffplatte erhitzt wird. Vorzugsweise wird das thermische Verschweißen bei Temperaturen von 50 bis 300 °C oberhalb der Glasübergangstemperatur bei amorphen thermoplastischen Schaumstoffen oder von 50 bis 100°C oberhalb der Schmelztemperatur bei teilkristallinen thermoplastischen Schaumstoffen durchgeführt.

Die mit dem erfindungsgemäßen Verfahren hergestellten thermoplastischen Schaumstoffplatten können zusätzliche Stoffe/Verbindungen mit speziellen Verwendungseigenschaften, beispielsweise Flammschutzmittel oder Absorber von elektromagnetischer Strahlung, enthalten. Erfindungsgemäß werden solche zusätzlichen Stoffe vor dem thermischen Verschweißen auf mindestens eine Oberfläche der thermisch zu verschweißenden Ausgangsplatten aufgetragen, vorzugsweise werden diese Stoffe pro zu verschweißendem Plattenpaar auf beide Oberflächen der Ausgangsplatten aufgetragen.

In einer Ausführungsform der vorliegenden Erfindung enthalten die mit dem erfindungsgemäßen Verfahren hergestellten thermoplastischen Schaumstoffplatten mindestens ein Flammschutzmittel. Flammschutzmittel als solche sind dem Fachmann bekannt. Bevorzugte Flammschutzmittel im Rahmen der vorliegenden Erfindung sind ausgewählt aus einem Phosphat, einem Phosphit, einem Phosphonat, einem Polyphosphonat, Melamin, einem Metalloxidhydrat, insbesondere einem Aluminiumoxidhydrat oder einer halogenierten organischen Verbindung. Die vorgenannten Flammschutzmittel, vorzugsweise die phosphorhaltigen Flammschutzmittel, aber nicht die halogenierten organischen Verbindungen, werden vorzugsweise vor dem thermischen Verschweißen direkt auf mindestens eine Oberfläche (pro Plattenpaar) der zu verschweißenden Ausgangsplatten aufgetragen.

Bevorzugte Phosphate und Phosphonate sind ausgewählt aus DMMP (Dimethylmethylphosphonat), DMPP (Dimethylpropylphosphonat), TCEP (Tris(chlorethyl)phosphat), TCPP (Tris(chlorpropyl)phosphat), TDCPP (Tris(dichlor-isopropyl)phosphat), TPP (Triphenylphosphat), TEHP (Tris-(2-ethylhexyl)phosphat), TKP (Trikresylphosphat) oder TCEP (Trichlorpropylphosphat).

Bevorzugte halogenierte organische Verbindungen sind bromhaltige organische Verbindungen, besonders bevorzugt sind HBCD (Hexabromcyclododekan) oder bromierte Polystyrole. Bromierte Polystyrole sind kommerziell erhältlich, beispielsweise von Emerald, Fa. Great Lakes. Sie werden vorzugsweise in Mengen von 0,5 bis 5 Gew.-% (bezogen auf die Ausgangsplatte) eingesetzt. Sofern halogenierte organische Verbindungen als Flammschutzmittel eingesetzt werden, erfolgt dies vorzugsweise bereits während des Herstellungsprozesses der Ausgangsplatten, das heißt, das Flammschutzmittel ist gleichmäßig über die gesamte Dicke der jeweiligen Ausgangsplatte verteilt.

Ein besonders bevorzugtes Flammschutzmittel ist Dimethylpropylphosphonat (DMPP), das beispielsweise kommerziell erhältlich ist unter der Bezeichnung Levagard DMPP von der Firma Lanxess. In einer Ausführungsform der vorliegenden Erfindung ist Blähgraphit bevorzugt, der ebenfalls als Absorber verwendet werden kann.

Sofern erfindungsgemäß ein Flammschutzmittel verwendet wird, ist es bevorzugt, dass das thermische Verschweißen in Gegenwart von mindestens einem Flammschutzmittel durchgeführt wird und dass pro zu verschweißendem Plattenpaar auf mindestens eine, vorzugsweise auf beide thermisch zu verschweißenden Oberflächen der dünneren thermoplastischen Schaumstoffplatten das Flammschutzmittel in Mengen von mehr als 5 g/m² aufgetragen wird. Vorzugsweise wird auf beide thermisch zu verschweißenden Oberflächen das Flammschutzmittel in Mengen von mehr als 10 g/m², insbesondere von mehr als 15 g/m², aufgetragen.

In einer bevorzugten Ausführungsform der vorliegenden Erfindung wird das thermische Verschweißen in Gegenwart von mindestens zwei Flammschutzmitteln durchgeführt, wobei 0,5 bis 5 Gew.-% von mindestens einer halogenierten organischen Verbindung während der Herstellung der Ausgangsplatten in diese eingebracht werden. Vor dem thermischen Verschweißen wird mindestens ein weiteres Flammschutzmittel, vorzugsweise ein phosphorhaltiges Flammschutzmittel, auf pro Plattenpaar mindestens eine thermisch zu verschweißende Oberfläche der Ausgangsplatten aufgetragen, vorzugsweise in Mengen von mehr als 10 g/^{m}2. Das weitere Flammschutzmittel ist somit nach dem Verschweißungsvorgang größtenteils (also zu mehr als 90 %) in der Nähe der Schweißnaht der thermoplastischen Schaumstoffplatte angeordnet.

Weiterhin können die mit dem erfindungsgemäßen Verfahren hergestellten thermoplastischen Schaumstoffplatten mindestens einen Absorber von elektromagnetischer Strahlung (im nachfolgenden Text auch als "Absorber" bezeichnet) enthalten. Vorzugsweise wird der Absorber von elektromagnetischer Strahlung als Dispersion eingesetzt, insbesondere als wässrige Dispersion. Das Auftragen auf die Plattenoberfläche kann beispielsweise durch Pinseln, Rakeln, Walzen, Sprühen oder Drucken erfolgen.

Die Menge an Absorber (fest) auf einer Oberfläche beträgt normalerweise 0,01 g/m² bis 100 g/m², bevorzugt 0,1g/m² bis 50 g/m², besonders bevorzugt 1 g/m² bis 20 g/m². Die Absorber können einseitig oder beidseitig aufgetragen werden.

Absorber von elektromagnetischer Strahlung als solche sind dem Fachmann bekannt. Geeignete Suszeptoren für Radiofrequenz Strahlung sind in WO 2006/050013, WO 99/47621 und WO 012/1725 beschrieben. Bevorzugte Suszeptoren sind polymere lonomere.

Absorber von anderen Strahlungsarten sind beispielsweise in WO 2009/071499 auf den Seiten 9 bis 11 beschrieben. Vorzugsweise wird im Rahmen der vorliegenden Erfindung der Absorber von elektromagnetischer Strahlung in Abhängigkeit von der zum thermischen Verschweißen verwendeten elektromagnetischen Strahlung ausgewählt. Erfolgt beispielsweise das thermische Verschweißen unter Verwendung von Mikrowellenstrahlen, wird vorzugsweise ein Absorber von elektromagnetischer Strahlung ausgewählt, der über eine gute Absorptionsfähigkeit im Wellenlängenbereich von Mikrowellen verfügt.

Geeignete Absorber sind beispielsweise organische IR-Absorber, organische Mikrowellen-Absorber, anorganische IR-Absorber oder anorganische Mikrowellenabsorber.

Unter IR-Absorber ist im Rahmen dieser Anmeldung eine Verbindung zu verstehen, die aufgebracht in einer Schichtdicke von < 50 µm bei mindestens einer Wellenlänge von Strahlung des Wellenlängenbereichs von 700 nm bis 1000 µm eine Absorption ≥90 % zeigt. Bevorzugt ist der Wellenlängenbereich von >700 nm bis 20 µm, sowie die Wellenlängen 9,6 µm und 10,6 µm.

Unter Mikrowellenabsorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 Ghz, 433-444 MHz und 902-928 MHz.

Vorzugsweise ist der Absorber von elektromagnetischer Strahlung ein Infrarot (IR)-Absorber und/oder Mikrowellenabsorber, insbesondere Graphit oder Ruß. Weiterhin ist es bevorzugt, dass die elektromagnetische Strahlung IR-Strahlung und/oder Mikrowellenstrahlung ist.

Gegebenenfalls kann im erfindungsgemäßen Verfahren ein Trocknungsschritt durchgeführt werden, beispielsweise nachdem ein Absorber von elektromagnetischer Strahlung auf die Oberfläche der dünneren thermoplastischen Schaumstoffplatten aufgetragen wurde. Das Trocknen findet normalerweise für eine Dauer von 10 Minuten bis 2 Stunden und/oder bei einer Temperatur im Bereich von 50 bis 100 °C statt.

Wie vorstehend bereits erwähnt, können außer dem Flammschutzmittel und/oder dem Absorber von elektromagnetischer Strahlung auch weitere Stoffe mit anderen Verwendungseigenschaften auf die zu verschweißende Oberfläche der entsprechenden dünneren thermoplastischen Schaumstoffplatten aufgetragen werden. Geeignete weitere Stoffe können beispielsweise Bindemittel, pH-Regulatoren sowie gegebenenfalls Lösungsmittel sein. Bindemittel, pH-Regulatoren sowie Lösungsmittel als solche sind dem Fachmann bekannt.

In einer Ausführungsform der vorliegenden Erfindung wird auf mindestens einer Oberfläche von mindestens einer dünneren thermoplastischen Schaumstoffplatte ein Gemisch aufgetragen, das i) mindestens einen Absorber von elektromagnetischer Strahlung, ii) mindestens ein Bindemittel und/oder iii) mindestens ein Flammschutzmittel enthält.

Geeignete Bindemittel im Rahmen der vorliegenden Erfindung sind ausgewählt aus Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Bevorzugte Bindemittel sind ausgewählt aus wässrigen Dispersionen oder Lösungen von Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Als Bindemittel besonders bevorzugt sind Dispersionen mit hohem Anteil an Polystyrol oder Copolymer davon, insbesondere mit einem hohen Anteil an Polystyrol. Diese Dispersionen werden vorzugsweise verwendet, wenn im erfindungsgemäßen Verfahren die dünneren thermoplastischen Schaumstoffplatten (Ausgangsplatten) ebenfalls Polystyrol oder Copolymere davon enthalten, weil dann die Eigenschaften der zumindest zweilagigen thermoplastischen Schaumstoffplatten (Verbundplatten) aufgrund der Verwendung des besagten Bindemittels noch weniger von den Ausgangsplatten abweichen.

In einer weiteren Ausführungsform betrifft die vorliegende Erfindung ein Verfahren zur Herstellung einer zumindest zweilagigen thermoplastischen Schaumstoffplatte durch thermisches Verschweißen von mindestens zwei dünneren thermoplastischen Schaumstoffplatten umfassend die folgenden Schritte a) bis e):
a) zwei dünnere thermoplastische Schaumstoffplatten werden in einem Abstand a parallel zueinander ausgerichtet, so dass sie einen Zwischenraum ausbilden,
b) in den Zwischenraum werden mindestens zwei Heizelemente auf parallel zueinander versetzten Ebenen und parallel zu den beiden dünneren thermoplastischen Schaumstoffplatten eingeführt, wobei sich die Oberflächen der beiden dünneren thermoplastischen Schaumstoffplatten und die Heizelemente nicht gegenseitig berühren,
c) die Heizelemente werden so weit zwischen die beiden dünneren thermoplastischen Schaumstoffplatten eingeführt, bis zwischen den beiden dünneren thermoplastischen Schaumstoffplatten bezogen auf jede Stelle der jeweiligen Oberfläche der beiden dünneren thermoplastischen Schaumstoffplatten zumindest zeitweise sich mindestens eines der Heizelemente befunden hat,
d) die Heizelemente werden vollständig aus dem Zwischenraum wieder entfernt,
e) mindestens eine der beiden dünneren thermoplastischen Schaumstoffplatten wird gegen die Oberfläche der jeweiligen anderen dünneren thermoplastischen Schaumstoffplatte gedrückt.

Für die einzelnen Schritte a) bis e) gelten die zuvor beschriebenen Ausführungen und Bevorzugungen.

Nachfolgend wird die Erfindung anhand von Beispielen verdeutlicht.

Die dünneren thermoplastischen Schaumstoffplatten ("Ausgangsplatten") werden in allen Beispielen in einem kontinuierlichen Extrusionsverfahren hergestellt, wie es in "Polystyrol, Kunststoffhandbuch 4" [H. Gausepohl u. R. Geliert, Hanser-Verlag München (1996)] unter Kapitel 13.2.3 (S. 591-598), insbesondere in Bild 13.24, oben, beschrieben ist. Jeweils zwei Ausgangsplatten (Styrodur 3035 CS, Dichte 35 g/l, Dicke 50 mm, Größe (Länge x Breite) 120 x 50 cm²) wurden zwei Wochen nach ihrer Herstellung unter Verwendung von zwei Heizelementen verschweißt. Bei den Beispielen mit schäumhautfreien Ausgangsplatten wurden etwa 24 Stunden vor dem Verschweißen bei den Ausgangsplatten durch Abhobeln der zu verschweißende Oberfläche um 3 mm die Schäumhaut entfernt. Die Dicke der Ausgangsplatten ist dann etwa 47 mm.

Die nachstehende Tabelle 1 beschreibt die für die verschiedenen Versuche verwendeten Verfahren näher. Unter "Einfuhr der beiden Heizelemente" wird die Einfuhr der beiden Heizelemente in den Zwischenraum zwischen den beiden dünneren thermoplastischen Schaumstoffplatten verstanden. Unter "Entfernen der beiden Heizelemente" wird das Entfernen der beiden Heizelemente aus dem Zwischenraum zwischen den beiden dünneren thermoplastischen Schaumstoffplatten verstanden.

**Tabelle 1**

| Versuch | Oberfläche der beiden Ausgangsplatten | Einfuhr der beiden Heizelemente | Entfernen der beiden Heizelemente |
|---|---|---|---|
| 1a | mit Schäumhaut | auf zueinander versetzten Ebenen aus entgegengesetzter Richtung | unter Richtungsbeibehalt |
| 1b | mit Schäumhaut | auf zueinander versetzten Ebenen aus entgegengesetzter Richtung | unter Richtungsumkehr |
| 2a | schäumhautfrei | auf zueinander versetzten Ebenen aus entgegengesetzter Richtung | unter Richtungsbeibehalt |
| 2b | schäumhautfrei | auf zueinander versetzten Ebenen aus entgegengesetzter Richtung | unter Richtungsumkehr |
| 3 (Vgl.) | schäumhautfrei | auf einer Ebene aus entgegengesetzter Richtung | unter Richtungsumkehr |
| 4a (Vgl.) | schäumhautfrei | auf zueinander versetzten Ebenen aus gleicher Richtung | unter Richtungsbeibehalt |
| 4b (Vgl.) | schäumhautfrei | auf zueinander versetzten Ebenen aus gleicher Richtung | unter Richtungsumkehr |

"Vgl." steht in Tabelle 1 und in Tabelle 2 für "Vergleichsbeispiel".

Die Dicke der Schweißnaht wird mittels eines digitalen Aufsichtsmikroskops (Marke scopeEye) bei etwa sechzigfacher Vergrößerung bestimmt.

Die verschweißten zweilagigen thermoplastischen Schaumstoffplatten werden auf Zugfestigkeit in Plattenebene nach DIN EN 1607: 2013-05 und auf Brandverhalten auf B2 nach DIN 4102-1: 1998-05 geprüft. Bei der Brandprüfung wird die Schweißnaht direkt beflammt.

Sämtliche Messwerte werden an drei Positionen der verschweißten zweilagigen thermoplastischen Schaumstoffplatten geprüft. Alle drei Positionen weisen entlang der Breite der verschweißten zweilagigen thermoplastischen Schaumstoffplatten einen Abstand von 250 mm zum Rand der Schaumstoffplatten auf. Bezüglich der drei Positionen entlang der Länge der Schaumstoffplatten gilt:
Position 1: 200 mm Abstand von einem Rand der Schaumstoffplatten und 1000 mm Abstand vom zweiten Rand der Schaumstoffplatten
Position 2: 400 mm Abstand von Position 1; dies entspricht einem Abstand von 600 mm von einem und vom zweiten Rand der Schaumstoffplatten
Position 3: 400 mm Abstand von Position 2 und somit 800 mm Abstand von Position 1; dies entspricht einem Abstand von 1000 mm von einem Rand der Schaumstoffplatten und 200 mm vom zweiten Rand der Schaumstoffplatten

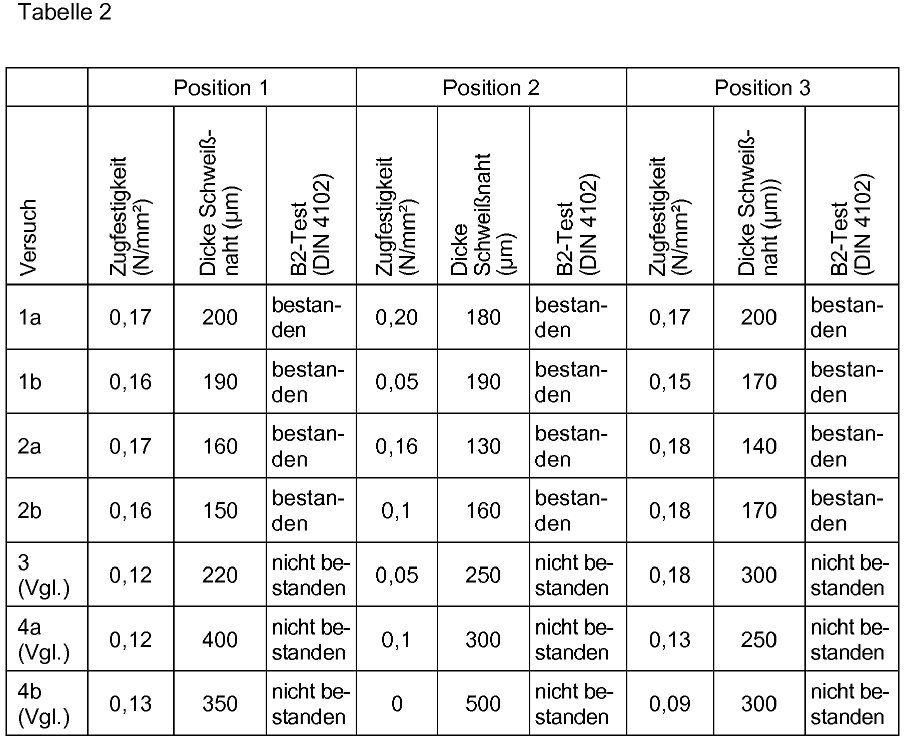

Die erfindungsgemäßen Beispiele 1 a, 1 b, 2a und 2b zeigen deutlich, dass durch die Einfuhr von mindestens zwei Heizelementen auf parallel zueinander versetzten Ebenen aus zueinander entgegengesetzten Richtungen in dem Zwischenraum zwischen den beiden dünneren thermoplastischen Schaumstoffplatten ein technischer Effekt resultiert. Die Schweißnaht ist in den erfindungsgemäßen Beispielen dünner als die Schweißnähte, wie sie mit den im Stand der Technik beschriebenen Verfahren erhalten werden (Vergleichsbeispiele 3, 4a und 4b). Außerdem bestehen die mindestens zweilagigen thermoplastischen Schaumstoffplatten, die erfindungsgemäß hergestellt worden sind, den Brandtest B2 nach DIN 4102-1: 1998-05. Darüber hinaus werden im Allgemeinen durch das erfindungsgemäße Verfahren höhere Zugfestigkeiten erzielt.

## Patentansprüche

1. Verfahren zur Herstellung einer zumindest zweilagigen thermoplastischen Schaumstoffplatte durch thermisches Verschweißen von mindestens zwei dünneren thermoplastischen Schaumstoffplatten, umfassend die folgenden Schritte a) bis e):
a) zwei dünnere thermoplastische Schaumstoffplatten (3,4) werden in einem Abstand a parallel zueinander ausgerichtet, so dass sie einen Zwischenraum ausbilden,
b) in den Zwischenraum werden mindestens zwei Heizelemente (1, 2) auf parallel zueinander versetzten Ebenen und parallel zu den beiden dünneren thermoplastischen Schaumstoffplatten (3,4) eingeführt, wobei sich die Oberflächen der beiden dünneren thermoplastischen Schaumstoffplatten (3, 4) und die Heizelemente (1, 2) nicht gegenseitig berühren,
c) die Heizelemente (1, 2) werden so weit zwischen die beiden dünneren thermoplastischen Schaumstoffplatten (3, 4) eingeführt, bis zwischen den beiden dünneren thermoplastischen Schaumstoffplatten (3, 4) bezogen auf jede Stelle der jeweiligen Oberfläche der beiden dünneren thermoplastischen Schaumstoffplatten (3, 4) zumindest zeitweise sich mindestens eines der Heizelemente (1, 2) befunden hat,
d) die Heizelemente (1, 2) werden vollständig aus dem Zwischenraum wieder entfernt,
e) mindestens eine der beiden dünneren thermoplastischen Schaumstoffplatten (3,4) wird gegen die Oberfläche der jeweiligen anderen dünneren thermoplastischen Schaumstoffplatte gedrückt
wobei in Schritt b) zwei Heizelemente (1, 2) aus jeweils zueinander entgegengesetzten Richtungen in den Zwischenraum eingeführt werden und/oder zwei Heizelemente (1, 2) in Schritt d) in jeweils zueinander entgegengesetzten Richtungen aus dem Zwischenraum wieder entfernt werden.

2. Verfahren gemäß Anspruch 1, **dadurch gekennzeichnet, dass** die durch das thermische Verschweißen gebildete Schweißnaht eine Dicke von 30 bis 200 µm aufweist, vorzugsweise von 50 bis 150 µm, mehr bevorzugt von 70 bis 130 µm, insbesondere von 80 bis 100 µm.

3. Verfahren gemäß Anspruch 1 oder 2, **dadurch gekennzeichnet, dass** die dünnere thermoplastische Schaumstoffplatte (3, 4) ein Partikelschaumstoff oder ein Extrusionsschaumstoff ist, vorzugsweise ein Extrusionsschaumstoff aus Polystyrol oder aus einem aus Styrol hergestellten Copolymer.

4. Verfahren gemäß einem der Ansprüche 1 bis 3, **dadurch gekennzeichnet, dass** die thermoplastische Schaumstoffplatte (3, 4) mindestens ein Flammschutzmittel enthält, das vorzugsweise ausgewählt ist aus einem Phosphat, einem Phosphit, einem Phosphonat, einem Polyphosphonat, Melamin, einem Aluminiumoxidhydrat oder einer halogenierten organischen Verbindung.

5. Verfahren gemäß einem der Ansprüche 1 bis 4, **dadurch gekennzeichnet, dass** pro zu verschweißendem Plattenpaar mindestens eine, vorzugsweise beide thermisch zu verschweißenden Oberflächen der dünneren thermoplastischen Schaumstoffplatten (3, 4) schäumhautfrei sind.

6. Verfahren gemäß einem der Ansprüche 1 bis 5, **dadurch gekennzeichnet, dass** das thermische Verschweißen bei Temperaturen von 50 bis 300 °C oberhalb der Glasübergangstemperatur bei amorphen thermoplastischen Schaumstoffen oder von 50 bis 100 °C oberhalb der Schmelztemperatur bei teilkristallinen thermoplastischen Schaumstoffen durchgeführt wird.

7. Verfahren gemäß einem der Ansprüche 1 bis 6, **dadurch gekennzeichnet, dass** zwei Heizelemente (1, 2) verwendet werden und/oder die Heizelemente (1, 2) Heizplatten sind, vorzugsweise IR-Strahler mit einer Oberflächentemperatur von 200 bis 1000 °C, insbesondere von 300 bis 700 °C.

8. Verfahren gemäß einem der Ansprüche 1 bis 7, **dadurch gekennzeichnet, dass** die Heizelemente (1, 2) in den Schritten b) und d) mit einer Geschwindigkeit von 0,1 bis 5 m/s, vorzugsweise von 0,3 bis 3 m/s, bewegt werden.

9. Verfahren gemäß einem der Ansprüche 1 bis 8, **dadurch gekennzeichnet, dass** in Schritt b) zwei Heizelemente (1, 2) aus jeweils zueinander entgegengesetzten Richtungen in den Zwischenraum eingeführt werden und zwei Heizelemente (1, 2) in Schritt d) in jeweils zueinander entgegengesetzten Richtungen aus dem Zwischenraum wieder entfernt werden.

10. Verfahren gemäß einem der Ansprüche 1 bis 9, **dadurch gekennzeichnet, dass** die Gesamtdauer der Schritte b) bis e) maximal 20 Sekunden, vorzugsweise maximal 10 Sekunden, insbesondere maximal 5 Sekunden beträgt.

11. Verfahren gemäß einem der Ansprüche 1 bis 10, **dadurch gekennzeichnet, dass** die zwei dünneren thermoplastischen Schaumstoffplatten (3,4) in Schritt a) jeweils eine Länge (x-Richtung) von 500 bis 2800 mm, vorzugsweise von 1000 bis 1500 mm, eine Breite (y-Richtung) von 500 bis 1250 mm, vorzugsweise von 500 bis 900 mm, und eine Dicke (z-Richtung) von 20 bis 200 mm, vorzugsweise von 50 bis 100 mm, aufweisen.

12. Verfahren gemäß einem der Ansprüche 1 bis 11, **dadurch gekennzeichnet, dass** die Heizelemente (1, 2) in ihrer Länge (x-Richtung) jeweils gleich groß oder maximal 10 % größer sind als die entsprechenden Längen (x-Richtung) der zwei dünneren thermoplastischen Schaumstoffplatten (3, 4) und die Heizelemente (1, 2) in ihrer Breite (y-Richtung) 30 bis 100 %, vorzugsweise 60 bis 80 %, der entsprechenden Breite (y-Richtung) der zwei dünneren thermoplastischen Schaumstoffplatten (3, 4) betragen.

13. Verfahren gemäß einem der Ansprüche 1 bis 12, **dadurch gekennzeichnet, dass** die Heizelemente (1, 2) parallel zur xy-Ebene und entlang der γ-Richtung (Breite) der zwei dünneren thermoplastischen Schaumstoffplatten (3, 4) bewegt werden.

14. Verfahren gemäß einem der Ansprüche 1 bis 13, **dadurch gekennzeichnet, dass** die thermoplastischen Schaumstoffplatten (3, 4) eine Dichte von 10 bis 500 g/l, vorzugweise von 15 bis 200 g/l, insbesondere von 20 bis 150 g/l, aufweisen.

15. Verfahren gemäß einem der Ansprüche 1 bis 14, **dadurch gekennzeichnet, dass** das Verfahren in einer thermisch isolierten Einhausung durchgeführt wird und eine um +/- 10 °C konstante Temperatur im Bereich von 40 bis 200 °C, bevorzugt von 50 bis 100 °C, in der thermischen Einhausung aufrechterhalten wird.

16. Verfahren gemäß einem der Ansprüche 1 bis 15, **dadurch gekennzeichnet, dass** in den Schritten b) bis d) der Abstand zwischen der Oberfläche jeweils einer der beiden dünneren thermoplastischen Schaumstoffplatten (3,4) und der Oberfläche des ihr jeweils räumlich am nächsten kommenden Heizelementes 0,5 bis 25 mm, bevorzugt 1 bis 10 mm beträgt.

## Claims

1. A process for the production of an at least two-layer thermoplastic foam sheet via thermal welding of at least two thinner thermoplastic foam sheets, comprising the following steps a) to e):
a) two thinner thermoplastic foam sheets (3, 4) are oriented parallel to one another with a separation a, in such a way that they form an intermediate space,
b) at least two heating elements (1, 2) are introduced on parallel-offset planes, and parallel to the two thinner thermoplastic foam sheets (3, 4), into the intermediate space, and the surfaces of the two thinner thermoplastic foam sheets (3, 4) here do not touch the heating elements (1, 2),
c) the heating elements (1, 2) are introduced between the two thinner thermoplastic foam sheets (3, 4) to an extent such that, in relation to every location on the respective surface of the two thinner thermoplastic foam sheets (3, 4), at least one of the heating elements (1, 2) has been present at least temporarily between the two thinner thermoplastic foam sheets (3, 4)
d) the heating elements (1, 2) are removed completely from the intermediate space,
e) at least one of the two thinner thermoplastic foam sheets (3, 4) is forced against the surface of the respective other thinner thermoplastic foam sheet
where, in step b), two heating elements (1, 2) are introduced from, in each case, mutually opposite directions into the intermediate space and/or, in step d), two heating elements (1, 2) are in turn removed in, in each case, mutually opposite directions from the intermediate space.

2. The process according to claim 1, wherein the thickness of the weld formed via the thermal welding process is from 30 to 200 µm, preferably from 50 to 150 µm, more preferably from 70 to 130 µm, in particular from 80 to 100 µm.

3. The process according to claim 1 or 2, wherein the thinner thermoplastic foam sheet (3, 4) is a molded foam or an extruded foam, preferably an extruded foam made of polystyrene or made of a copolymer produced from styrene.

4. The process according to any of claims 1 to 3, wherein the thermoplastic foam sheet (3, 4) comprises at least one flame retardant preferably selected from a phosphate, a phosphite, a phosphonate, a polyphosphonate, melamine, an aluminum oxide hydrate, or a halogenated organic compound.

5. The process according to any of claims 1 to 4, wherein, in each sheet pair to be welded, at least one and preferably both of the surfaces to be thermally welded of the thinner thermoplastic foam sheets (3, 4) are foaming-skin-free.

6. The process according to any of claims 1 to 5, wherein the thermal welding process is carried out at temperatures which are from 50 to 300°C above the glass transition temperature in the case of amorphous thermoplastic foams, or which are from 50 to 100°C above the melting point in the case of semicrystalline thermoplastic foams.

7. The process according to any of claims 1 to 6, wherein two heating elements (1, 2) are used, and/or the heating elements (1, 2) are heating plates, preferably IR sources with surface temperature from 200 to 1000°C, in particular from 300 to 700°C.

8. The process according to any of claims 1 to 7, wherein the heating elements (1, 2) in the steps b) and d) are moved with a velocity of from 0.1 to 5 m/s, preferably from 0.3 to 3 m/s.

9. The process according to any of claims 1 to 8, wherein, in step b), two heating elements (1, 2) are introduced from respectively mutually opposite directions into the intermediate space, and/or, in step d), two heating elements (1, 2) are removed in respectively mutually opposite directions from the intermediate space.

10. The process according to any of claims 1 to 9, wherein the total duration of the steps b) to e) is at most 20 seconds, preferably at most 10 seconds, in particular at most 5 seconds.

11. The process according to any of claims 1 to 10, wherein, in step a), the length (x-direction) of the two thinner thermoplastic foam sheets (3, 4) is respectively from 500 to 2800 mm, preferably from 1000 to 1500 mm, and their width (y-direction) is from 500 to 1250 mm, preferably from 500 to 900 mm, and their thickness (z-direction) is from 20 to 200 mm, preferably from 50 to 100 mm.

12. The process according to any of claims 1 to 11, wherein the length (x-direction) of the heating elements (1, 2) is respectively the same as or at most 10% greater than the corresponding lengths (x-direction) of the two thinner thermoplastic foam sheets (3, 4), and the width (y-direction) of the heating elements (1, 2) is from 30 to 100%, preferably from 60 to 80%, of the corresponding width (y-direction) of the two thinner thermoplastic foam sheets (3, 4).

13. The process according to any of claims 1 to 12, wherein the heating elements (1, 2) are moved parallel to the xy-plane and along the γ-direction (width) of the two thinner thermoplastic foam sheets (3, 4).

14. The process according to any of claims 1 to 13, wherein the density of the thermoplastic foam sheets (3, 4) is from 10 to 500 g/l, preferably from 15 to 200 g/l, in particular from 20 to 150 g/l.

15. The process according to any of claims 1 to 14, wherein the process is carried out in a thermally insulated enclosure, and a temperature that is constant within +/- 10°C is maintained in the range from 40 to 200°C, preferably from 50 to 100°C, in the thermal enclosure.

16. The process according to any of claims 1 to 15, wherein, in the steps b) to d), the separation between the surface of each of the two thinner thermoplastic foam sheets (3, 4) and the surface of the respective heating element that is respectively spatially closest thereto is from 0.5 to 25 mm, preferably from 1 to 10 mm.

## Revendications

1. Procédé de fabrication d'une plaque de mousse thermoplastique au moins bicouche par soudage thermique d'au moins deux plaques de mousse thermoplastique plus minces, comprenant les étapes a) à e) suivantes :
a) deux plaques de mousse thermoplastique plus minces (3, 4) sont orientées parallèlement l'une à l'autre à une distance a, de sorte qu'elles forment un espace intermédiaire,
b) au moins deux éléments chauffants (1, 2) sont insérés dans l'espace intermédiaire dans des plans parallèles les uns aux autres et parallèles aux deux plaques de mousse thermoplastique plus minces (3, 4), les surfaces des deux plaques de mousse thermoplastique plus minces (3, 4) et les éléments chauffants (1, 2) n'étant pas en contact mutuel,
c) les éléments chauffants (1, 2) sont introduits à une distance telle entre les deux plaques de mousse thermoplastique plus minces (3, 4) qu'au moins un des éléments chauffants (1, 2) se trouve au moins temporairement entre les deux plaques de mousse thermoplastique plus minces (3, 4), par rapport à chaque emplacement de la surface respective des deux plaques de mousse thermoplastique plus minces (3, 4),
d) les éléments chauffants (1, 2) sont entièrement retirés de l'espace intermédiaire,
e) au moins une des deux plaques de mousse thermoplastique plus minces (3, 4) est pressée contre la surface de l'autre plaque de mousse thermoplastique plus mince,
deux éléments chauffants (1, 2) étant introduits dans l'espace intermédiaire à l'étape b) à partir de directions opposées l'une à l'autre et/ou deux éléments chauffants (1, 2) étant retirés de l'espace intermédiaire à l'étape d) dans des directions opposées l'une à l'autre.

2. Procédé selon la revendication 1, **caractérisé en ce que** le joint de soudure formé par le soudage thermique a une épaisseur de 30 à 200 µm, de préférence de 50 à 150 µm, de manière davantage préférée de 70 à 130 µm, notamment de 80 à 100 µm.

3. Procédé selon la revendication 1 ou 2, **caractérisé en ce que** la plaque de mousse thermoplastique plus mince (3, 4) est une mousse particulaire ou une mousse extrudée, de préférence une mousse extrudée de polystyrène ou d'un copolymère fabriqué à partir de styrène.

4. Procédé selon l'une quelconque des revendications 1 à 3, **caractérisé en ce que** la plaque de mousse thermoplastique (3, 4) contient au moins un agent ignifuge, qui est de préférence choisi parmi un phosphate, un phosphite, un phosphonate, un polyphosphonate, la mélamine, un oxyhydrate d'aluminium ou un composé organique halogéné.

5. Procédé selon l'une quelconque des revendications 1 à 4, **caractérisé en ce que**, par paire de plaques à souder, au moins une, de préférence les deux surfaces à souder thermiquement des plaques de mousse thermoplastique plus minces (3, 4) sont exemptes de peau de mousse.

6. Procédé selon l'une quelconque des revendications 1 à 5, **caractérisé en ce que** le soudage thermique est réalisé à des températures de 50 à 300 °C au-dessus de la température de transition vitreuse pour les mousses thermoplastiques amorphes ou de 50 à 100 °C au-dessus de la température de fusion pour les mousses thermoplastiques partiellement cristallines.

7. Procédé selon l'une quelconque des revendications 1 à 6, **caractérisé en ce que** deux éléments chauffants (1, 2) sont utilisés et/ou les éléments chauffants (1, 2) sont des plaques chauffantes, de préférence des émetteurs d'IR ayant une température de surface de 200 à 1 000 °C, notamment de 300 à 700 °C.

8. Procédé selon l'une quelconque des revendications 1 à 7, **caractérisé en ce que** les éléments chauffants (1, 2) sont déplacés aux étapes b) et d) à une vitesse de 0,1 à 5 m/s, de préférence de 0,3 à 3 m/s.

9. Procédé selon l'une quelconque des revendications 1 à 8, **caractérisé en ce que** deux éléments chauffants (1, 2) sont introduits dans l'espace intermédiaire à l'étape b) à partir de directions opposées l'une à l'autre et deux éléments chauffants (1, 2) sont retirés de l'espace intermédiaire à l'étape d) dans des directions opposées l'une à l'autre.

10. Procédé selon l'une quelconque des revendications 1 à 9, **caractérisé en ce que** la durée totale des étapes b) à e) est d'au plus 20 secondes, de préférence d'au plus 10 secondes, notamment d'au plus 5 secondes.

11. Procédé selon l'une quelconque des revendications 1 à 10, **caractérisé en ce que** les deux plaques de mousse thermoplastique plus minces (3, 4) présentent chacune à l'étape a) une longueur (direction x) de 500 à 2 800 mm, de préférence de 1 000 à 1 500 mm, une largeur (direction y) de 500 à 1 250 mm, de préférence de 500 à 900 mm, et une épaisseur (direction z) de 20 à 200 mm, de préférence de 50 à 100 mm.

12. Procédé selon l'une quelconque des revendications 1 à 11, **caractérisé en ce que** les éléments chauffants (1, 2) sont chacun d'une longueur (direction x) égale ou au plus 10 % supérieure aux longueurs correspondantes (direction x) des deux plaques de mousse thermoplastique plus minces (3, 4), et les éléments chauffants (1, 2) sont d'une largeur (direction y) de 30 à 100 %, de préférence de 60 à 80 %, de la largeur correspondante (direction y) des deux plaques de mousse thermoplastique plus minces (3, 4).

13. Procédé selon l'une quelconque des revendications 1 à 12, **caractérisé en ce que** les éléments chauffants (1, 2) sont déplacés parallèlement au plan xy et le long de la direction y (largeur) des deux plaques de mousse thermoplastique plus minces (3, 4).

14. Procédé selon l'une quelconque des revendications 1 à 13, **caractérisé en ce que** les plaques de mousse thermoplastique (3, 4) présentent une densité de 10 à 500 g/l, de préférence de 15 à 200 g/l, notamment de 20 à 150 g/l.

15. Procédé selon l'une quelconque des revendications 1 à 14, **caractérisé en ce que** le procédé est réalisé dans une enceinte isolée thermiquement et une température constante à ± 10 °C dans la plage allant de 40 à 200 °C, de préférence de 50 à 100 °C, est maintenue dans l'enceinte thermique.

16. Procédé selon l'une quelconque des revendications 1 à 15, **caractérisé en ce qu'**aux étapes b) à d), l'écart entre la surface de chacune des deux plaques de mousse thermoplastique plus minces (3, 4) et la surface de l'élément chauffant respectif voisin dans l'espace est de 0,5 à 25 mm, de préférence de 1 à 10 mm.
